# FASCICULE DE BREVET EUROPEEN

(11) **EP 1 893 421 B1**
(45) Date de publication et mention de la délivrance du brevet: **06.05.2009**
(21) Numéro de dépôt: 06755177.0
(22) Date de dépôt: 15.05.2006
(51) Int. Cl.: B60C 9/08

(54) **PNEUMATIQUE AVEC FLANCS ONDULES**
REIFEN MIT KORRUGIERTEN SEITENWÄNDEN
TYRE WITH CORRUGATED SIDEWALLS

(30) Priorité: 02.06.2005 FR 0505669
(43) Date de publication de la demande: 05.03.2008
(73) Titulaire: Société de Technologie Michelin, 63000 Clermont-Ferrand (FR); Michelin Recherche et Technique S.A., 1763 Granges-Paccot (CH)
(72) Inventeur: MERINO, Jose, F-63200 Riom (FR)
(74) Mandataire: Le Cam, Véronique Marie Christine
(86) Numéro de dépôt international: PCT/EP2006/062299
(87) Numéro de publication internationale: WO 2006/128789

(56) Documents cités:
- EP-A- 0 667 250
- WO-A-20/04045870

## Description

La présente invention concerne les pneumatiques. Plus particulièrement, elle concerne un pneumatique comportant une disposition particulière des fils de la structure de renfort de type carcasse dans les flancs, permettant, d'une part, l'obtention de flancs souples, susceptibles de conférer des qualités, notamment de confort et de résistante au roulement particulièrement favorables aux pneumatiques à taille basse, et d'autre part, l'obtention de pneumatiques à taille très basse ou avec des hauteurs de flancs très réduites.

De plus en plus de véhicules sont équipés de pneumatiques à taille basse. Ces types de pneumatiques sont recherchés pour leurs qualités intrinsèques en terme de réactivité, de sensation et pour la conduite sportive qu'ils permettent de procurer. Or, ces qualités sont souvent obtenues au détriment du confort. En effet, plus les flancs sont courts, plus le confort est réduit. Dans certains cas de figure, le niveau de rigidité atteint est tel que le véhicule peut devenir inconfortable dans certains cas très défavorables, tel que par exemple sur un revêtement fortement dégradé.

Le document EP 0 667 250 décrit un pneumatique avec des caractéristiques de maniabilité améliorées grâce à l'utilisation de renforts circonférentiels comportant des coefficients de contraction thermiques différents. Ainsi, après vulcanisation, certains fils -à haut coefficient- occupent une position axiale plus vers l'intérieur que d'autres -ceux dont le coefficient est plus faible. Par nature, ces différentes positions concernent tout le profil du pneumatique. Un tel procédé ne permet pas de localiser les écarts de position axiale sur une seule portion du profil.

Le document WO 2004/045870 décrit un pneumatique à mobilité étendue dont les fils de renforts sont identiques ou similaires et comportent des positions axiales différentes. Ce pneumatique implique l'utilisation de renforts circonférentiels à mi-hauteur de flancs afin notamment d'éviter ou limiter l'affaissement lors de fortes sollicitations des flancs.

Afin de pallier ces différents inconvénients, l'invention prévoit un pneumatique comportant au moins une structure de renfort de type carcasse ancrée de chaque côté du pneumatique dans un bourrelet dont la base est destinée à être montée sur un siège de jante, chaque bourrelet se prolongeant radialement vers l'extérieur par un flanc, les flancs rejoignant radialement vers l'extérieur une bande de roulement, la structure, de renfort de type carcasse s'étendant circonférentiellement depuis le bourrelet vers ledit flanc, une armature de sommet, chacun des bourrelets comportant par ailleurs une zone d'ancrage permettant le maintien de la structure de renfort dans chacun desdits bourrelets, ladite structure de renfort de type carcasse étant agencée de façon à ce que, d'une part, dans la portion sensiblement médiane du flanc, les fils de ladite structure de renfort comportent, sur la circonférence, des positions axiales différentes, de façon à former une zone de flanc avec ondulations comportant le long du parcours circonférentiel une succession d'ondulations sensiblement régulières formant un profil circonférentiel ondulé, et d'autre part, hors de cette zone, tous les fils de structure de type carcasse occupent une position axiale sensiblement identique.

La solution proposée par la présente invention permet de s'affranchir de certains inconvénients des pneumatiques de type courant. En outre, ce type d'architecture est particulièrement avantageux pour les pneumatiques à flancs courts. Elle permet d'aller au-delà des limites de conception actuelles et donc de concevoir des pneumatiques à flancs très courts. En outre, de façon inattendue, il a été constaté que les renforts circonférentiels à mi-hauteur de flanc, tels que présentés dans le document WO 2004/045870, peuvent être omis, sans compromettre pour autant les caractéristiques opérationnelles du pneumatique. Le surplus de souplesse résultant permet de réduire la taille des flancs, pour ainsi produire des pneumatiques à flancs courts ou très courts.

Selon un mode de réalisation avantageux, ladite zone de flanc avec ondulations s'étend radialement dans le flanc entre le bourrelet et la zone de sommet.

Dans ladite zone de flanc avec ondulations, les différentes positions possibles des fils de ladite structure de renfort se situent avantageusement entre un cheminement de structure de renfort le plus axialement intérieur et un cheminement de structure de renfort le plus axialement extérieur.

Selon une variant avantageuse, la surface extérieure dudit flanc du pneumatique, dans la zone où la structure de renfort comporte lesdites ondulations, comporte également un profil circonférentiel ondulé, sensiblement en correspondance avec ledit profil formé par ladite structure de renfort. Les ondulations de flanc permettent de visualiser les caractéristiques architecturales internes du pneumatique. Ce dernier aspect permet par exemple de mieux identifier ce type de technologie. Selon une variante, la surface extérieure du flanc est sensiblement rectiligne. L'architecture particulière de la structure de renfort n'est donc pas révélée, et le profil du flanc est classiquement configuré.

Selon diverses formes de réalisation, la position axiale d'un fil de renfort, pour une position circonférentielle donnée du profil circonférentiel ondulé, est soit sensiblement symétrique dans chaque flanc par rapport au plan médian dudit pneumatique, soit sensiblement à l'opposée dans chaque flanc. Ainsi, les parcours des structures de renfort de type carcasse peuvent être agencés selon deux types de configurations, soit par exemple une configuration « en opposition de phase », dans laquelle la position axiale d'un fil de renfort, pour une position circonférentielle donnée du profil circonférentiel ondulé, est sensiblement symétrique dans chaque flanc par rapport au plan médian dudit pneumatique ; ou une configuration « en phase », dans laquelle, la position axiale d'une portion de structure de renfort, pour une position circonférentielle donnée du profil circonférentiel ondulé, est sensiblement à l'opposée dans chaque flanc.

De manière avantageuse, le rapport h/H est compris entre 0,2 et 0,75, et plus particulièrement entre 0,2 et 0,50.

Selon un mode de réalisation avantageux, la distance D est au minimum de 1,25d.

Les distances D et d forment avantageusement entre elles un rapport de : 1,5d<D<5d.

Tous les détails de réalisation sont donnés dans la description qui suit, complétée par les figures 1 à 5 où:

Les figures 1 a et 1b sont des coupes radiales montrant essentiellement un bourrelet, un flanc, et la moitié du sommet de deux exemples de réalisation d'un premier type de pneumatiques selon l'invention ;

Les figures 2b et 2c sont des coupes circonférentielles en vue partielles montrant essentiellement un flanc avec les positions radiales d'une série de fils de renfort en fonction de leur position radiales dans le flanc telle qu'illustrée à la figure 2a ;

Les figures 3a et 3b présentent des variantes de réalisation de l'exemple de la figure 2c ;

Les figures 4a et 4b sont des coupes radiales montrant les cheminements de fils de renfort de flanc dans chacun des flancs, en phase en 4a et en opposition de phase en 4b ;

La figure 5b illustre le profil dés flancs d'un pneumatique selon l'invention selon une coupe transversale, en différentes positions illustrées à la figure 5a : en A-A', en « zone étirée » ou « flanc tendu » et en B-B', en zone « flanc-ondulé, » ;

L'armature de renforcement ou renforcement des pneumatiques est à l'heure actuelle - et le plus souvent - constituée par empilage d'une ou plusieurs nappes désignées classiquement « nappes de carcasse », «nappes sommet», etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappe sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'encrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une triangle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Cependant, il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les fils des différentes structures de renfort sont appliqués directement sur les couches adjacentes de mélanges caoutchoutiques, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «triangle». Les produits de base tels les mélanges caoutchoutiques et les renforts sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par une agencement dans lequel on dispose de façon adjacente à ladite structure de renfort de flanc des filaments circonférentiels, le tout étant noyé dans un mélange caoutchoutique d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou de renforts sous forme de filaments.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse», ou «renfort de flanc» est valable pour désigner les fils de renforts d'une nappe carcasse dans le procédé classique, et les fils correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé massique, que l'ensemble formé par les filaments circonférentiels, le mélange caoutchoutique et les portions adjacentes de renfort de flanc d'une zone basse réalisée avec un procédé avec application sur un noyau toroïdal.

Dans la présente description, le terme "fil" désigne en toute généralité aussi bien des monofilaments que des multifilaments ou des assemblages comme des câbles, des retors ou encore tout type d'assemblage équivalent, et ceci, quels que soient la matière et le traitement de ces fils. Il peut s'agir par exemple de traitements dé surface, enrobage ou pré-encollage pour favoriser l'adhérence sur le caoutchouc. L'expression « fil unitaire » désigne un fil composé d'un seul élément, sans assemblage. Le terme « multifilaments » désigne au contraire un assemblage d'au moins deux éléments unitaires pour former un câble, un retors, etc.

On sait que, de façon traditionnelle, la ou les nappes de carcasse sont retournées autour d'une tringle. La tringle remplit alors une fonction d'ancrage de la carcasse. Ainsi, notamment, elle supporte la tension se développant dans les fils de carcasse par exemple sous l'effet de la pression de gonflage. L'agencement décrit dans le présent document permet d'assurer une fonction similaire d'ancrage. Il est également connu d'utiliser la tringle de type traditionnel pour assurer une fonction de serrage du bourrelet sur une jante. L'agencement décrit dans le présent document permet également d'assurer un rôle similaire de serrage.

Dans la présente description, on entend par gomme ou mélange de « liaison », le mélange caoutchoutique éventuellement en contact avec les fils de renforcement, adhérant à ceux-ci et susceptible de remplir les interstices entre fils adjacents.

On entend par "contact" entre un fil et une couche de gomme de liaison le fait qu'au moins une partie de la circonférence extérieure du fil est en contact intime avec le mélange caoutchoutique constituant de la gomme de liaison.

On désigne "flancs" les portons du pneumatique le plus souvent de faible rigidité de flexion situées entre le sommet et les bourrelets. On appelle "mélange flancs" les mélanges caoutchoutiques situés axialement extérieurement relativement aux fils de la structure de renforcement de la carcasse et à leur gomme de liaison. Ces mélanges ont habituellement un bas module d'élasticité.

On appelle "bourrelet" la portion du pneumatique adjacente radialement intérieurement au flanc.

On entend par "module d'élasticité" d'un mélange caoutchoutique, un module d'extension sécant obtenu à une déformation d'extension uniaxiale de l'ordre de 10% à température ambiante.

Pour rappel, "radialement vers le haut", ou "radialement supérieur" ou "radialement extérieurement" signifie vers les plus grands rayons.

Dans le présent mémoire, le terme "fil" désigne en toute généralité aussi bien des monofilaments que des multifilaments, ou des assemblages comme des câbles, des retors ou bien encore n'importe quel type d'assemblage équivalent, et ceci, quels que soit la matière et le traitement de ces fils, par exemple traitement de surface ou enrobage ou préencollage pour favoriser l'adhérence sur le caoutchouc.

Une structure de renfort ou de renforcement de type carcasse sera dite radiale lorsque ses fils sont disposés à 90°, mais aussi, selon la terminologie en usage, à un angle proche de 90°.

Par caractéristiques du fil, on entend par exemple ses dimensions, sa composition, ses caractéristiques et propriétés mécaniques (notamment le module), ses caractéristiques et propriétés chimiques, etc.

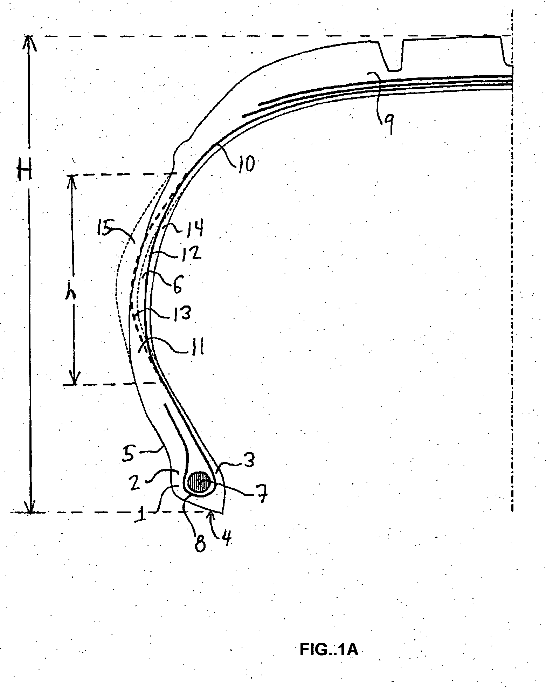

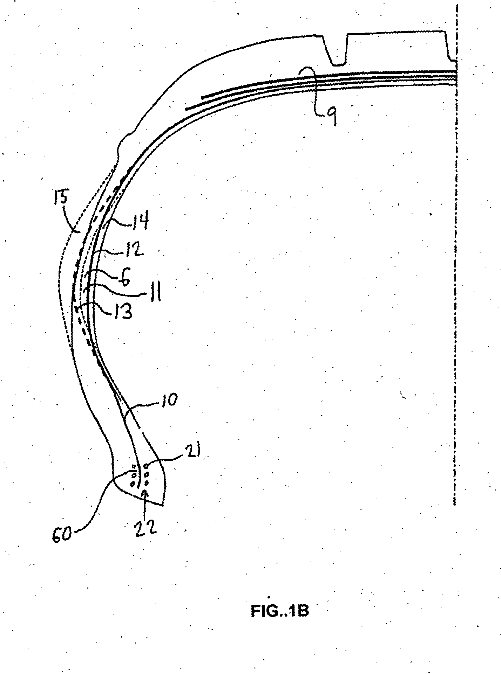

La distance h est la hauteur de la zone 11 de flanc avec ondulations, tel qu'illustré à la figure 1.

La distance H représente, de façon classique, la hauteur du pneumatique depuis la base de la zone basse jusqu'à la bande de roulement, tel qu'illustré à la figure 1.

La cote « d » représente le diamètre moyen de fils de la structure de renfort 10.

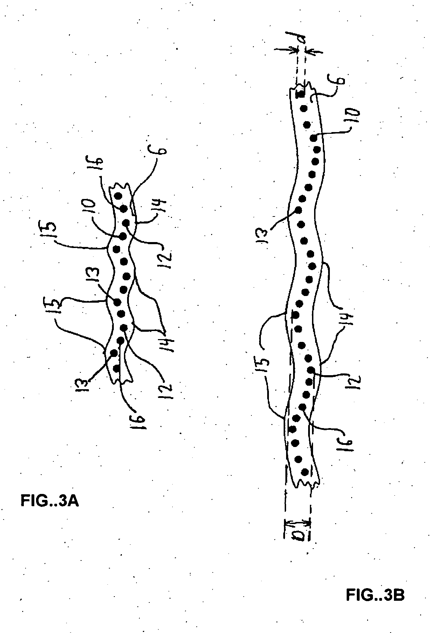

La cote « D » représente l'écart ou distance entre les positions les plus axialement éloignées ou opposées des fils de la structure de renfort, le long du profil, ou, en d'autres termes, la distance entre l'extérieur du profil du fil le plus axialement à l'extérieur et l'intérieur du profil du fil le plus axialement à l'intérieur, tel qu'illustré à la figure 3b.

Les figures 1a et 1 b illustrent la zone basse, notamment le bourrelet 1 d'une première forme d'exécution du pneumatique selon l'invention. Le bourrelet 1 comporte une portion axialement externe 2 prévue et conformée de façon à être placée contre le rebord d'une jante. La portion supérieure, ou radialement externe de la portion 2 forme une portion adaptée 5 au crochet de jante. Cette portion est souvent incurvée axialement vers l'extérieur, tel qu'illustré à la figure 1. La portion 2 se termine radialement et axialement vers l'intérieur par un siège de bourrelet 4, adapté pour être disposé contre un siège de jante. Le bourrelet comporte également une portion axialement interne 3, s'étendant sensiblement radialement depuis le siège 4 vers le flanc 6.

Le pneumatique comporte également une structure de renfort 10 ou de renfoncement de type carcasse pourvue de renforts avantageusement configurés selon un agencement sensiblement radial. Cette structure peut être agencée de façon continue d'un bourrelet à l'autre, en passant par les flancs et le sommet du pneumatique, ou encore, elle peut comporter deux ou plusieurs parties, agencées par exemple le long des flancs, sans couvrir la totalité du sommet.

Afin de positionner les fils de renforcement de façon aussi précise que possible, il est très avantageux de confectionner le pneumatique sur support rigide, par exemple un noyau rigide imposant la forme de sa cavité intérieure. On applique sur ce noyau, dans l'ordre requis par l'architecture finale, tous les constituants du pneumatique, qui sont disposés directement à leur place finale, sans que le profil du pneumatique doive être modifié lors de la confection.

Deux principaux types d'ancrage de la structure de renfort de type carcasse sont possibles. De façon typique, lé retournement de ladite structure 10 autour d'une tringle 7 au niveau du bourrelet 1 assure l'ancrage de la structure de renfort de type carcasse dans le bourrelet, tel qu'illustré par exemple à la figure 1a.

Autrement, la fonction d'ancrage peut être réalisée grâce à un agencement de fils circonférentiel, tel qu'illustré par exemple à la figure 1 b. Des fils circonférentiels 21 agencés de préférence sous forme de piles 22, forment un agencement de fils d'ancrage, prévu dans chacun des bourrelets. Ces fils sont de préférence métalliques, et éventuellement laitonnés. Diverses variantes prévoient avantageusement des fils de nature textile, comme par exemple en aramide, nylon, PET, PEN, ou hybride. Dans chaque pile, les fils sont avantageusement sensiblement concentriques et superposés.

Afin d'assurer un parfait ancrage de la structure de renfort, on réalise un bourrelet composite stratifié. A l'intérieur du bourrelet 1, entre les alignements de fil de la structure de renfort, on dispose les fils 21 orientés circonférentiellement. Ceux-ci sont disposés en une pile 22 comme sur les figures, ou en plusieurs piles adjacentes, ou en toute disposition judicieuse, selon le type de pneumatique et/ou les caractéristiques recherchées.

Les portions d'extrémité radialement internes de la structure de renfort 10 coopèrent avec les enroulements filaires. Il se crée ainsi un ancrage de ces portions dans lesdits bourrelets. Afin de favoriser cet ancrage, l'espace entre les fils circonférentiels et la structure de renfort est occupé par un mélange caoutchoutique 60 de liaison ou d'ancrage. On peut également prévoir l'utilisation de plusieurs mélanges ayant des caractéristiques différentes, délimitant plusieurs zones, les combinaisons de mélanges et les agencements résultants étant quasi-illimités. A titre d'exemple non limitatif, le module d'élasticité d'un tel mélange peut atteindre ou dépasser 10 à 15 Mpa, et même dans certains cas atteindre, voire dépasser 40 Mpa.

Les arrangements de fils peuvent être agencés et fabriqués de plusieurs façons. Par exemple, une pile peut avantageusement être constituée d'un seul fil enroulé (sensiblement à zéro degré) en spirale sur plusieurs tours, de préférence depuis le plus petit diamètre vers le plus grand diamètre. Une pile peut également être constituée de plusieurs fils concentriques posés l'un dans l'autre, de façon à ce que l'on superpose des anneaux de diamètre progressivement croissant. Il n'est pas nécessaire d'ajouter un mélange de caoutchouc pour assurer l'imprégnation du fil de renfort, ou des enroulements circonférentiels de fil.

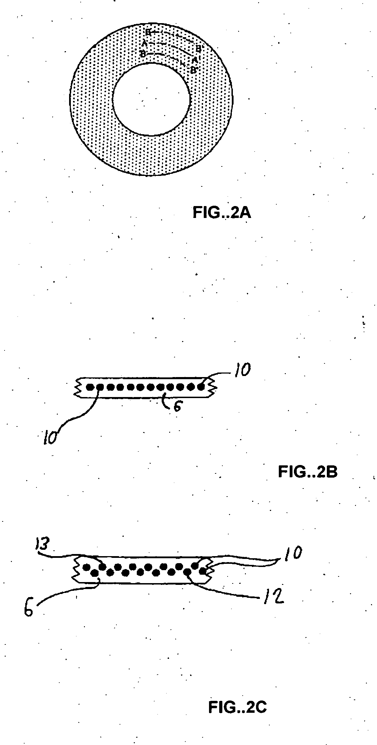

Les figures 1 a et 1b illustrent par ailleurs les différents cheminements possibles pour la structure de renfort de type carcasse 10. Une zone de flanc avec ondulations 11 s'étend radialement dans le flanc entre le bourrelet 1 et la zone de sommet 9. Hors de cette zone, tous les fils de structure de type carcasse occupent une position axiale sensiblement identique dans le flanc. Mais dans cette zone 11, les différents fils répartis le long du flanc n'occupent pas tous la même position axiale. Cela est bien visible sur les figures 2c, 3a et 3b en plus des figures 1a et 1b. Les différentes positions possible se situent entre un cheminement de structure de renfort le plus axialement intérieur 12 et un cheminement de structure de renfort le plus axialement extérieur 13 (en trait pointillé).

Entre ces positions extrêmes, on peut retrouver une ou plusieurs séries de positions intermédiaires 16, comme illustré par exemple aux figures 3a et 3b. Autrement, tel que montré à la figure 2c, on peut ne retrouver que les positions limites, sans aucune position intermédiaire.

Les figure 2b et 2c illustrent bien les nuances ou variations de positions axiales des fils de structure de renfort dans le flanc, en fonction de la position radiale dans ce dernier. Ainsi, la figure 2b montre bien un arrangement sensiblement linéaire des fils dans le flanc, dans la mesure où on observe les fils hors de la zone ondulée, comme par exemple aux positions radiales B-B' illustrées à la figure 2a La figure 2c montre les mêmes fils à une positon radiale correspondant sensiblement à la zone ondulée, comme par exemple à la position radiale A-A' illustrées à la figure 2a. La zone A-A' est donc comprise dans la zone ondulée 11 ou intervalle multi-positions.

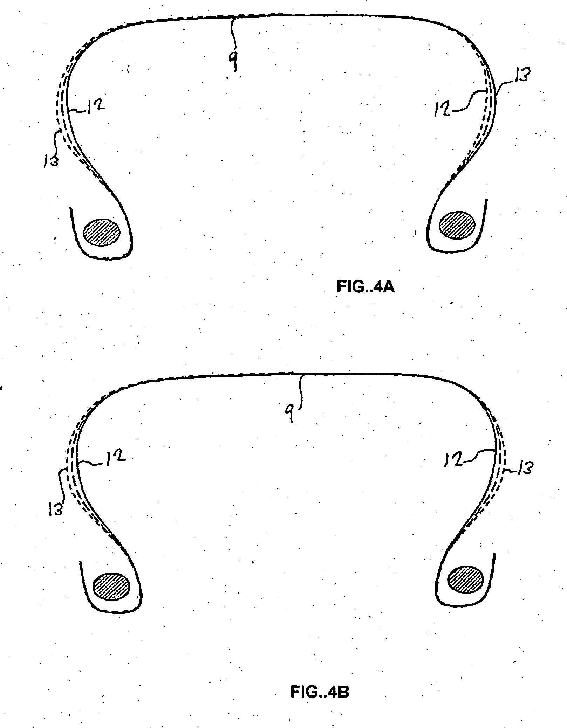

Les figures 4a et 4b illustrent deux exemples de cheminements des structures de renforts de type carcasse d'un bourrelet à l'autre du pneumatique. En 4b, le cheminement est symétrique, ou similaire de chaque coté de l'axe méridional de symétrie du pneumatique. Ainsi, les différentes portions des ondulations de part et d'autre du pneumatique sont alignées : les creux sont vis-à-vis les creux, les crêtes sont vis-à-vis les crêtes. Une telle symétrie présente plusieurs avantages, notamment au point de vue du comportement d'un pneumatique statiquement et dynamiquement bien équilibré.

En 4a, les différentes portions des ondulations de part et d'autre du pneumatique sont en phase : les creux d'un premier côté sont vis-à-vis les crêtes du second coté, les crêtes du premier côté sont vis-à-vis les creux du second. Une telle disposition antisymétrique présente plusieurs avantages, notamment au point de vue de la fabrication du pneumatique, puisque tous les tronçons de structure de renfort entre les deux bourrelets sont d'égale longueur, peu importe la position circonférentielle, ou le fait de se trouver sur un creux ou une crête.

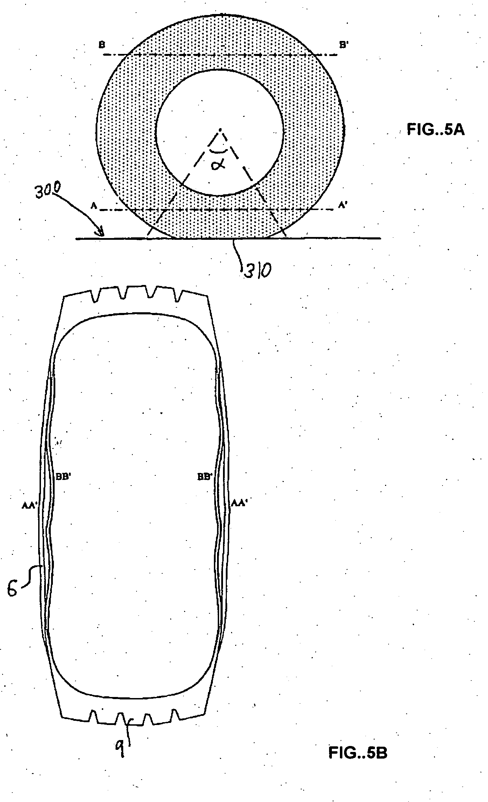

Les figures 5a et 5b illustrent l'influence de la position angulaire d'un pneumatique selon l'invention par rapport au sol 30, sur les évolutions dynamiques de la forme et de l'amplitude des ondulations. Dans la zone du flanc délimitée par l'angle α, correspondant sensiblement à l'aire de contact 310 avec le sol 300, le flanc subit une sollicitation mécanique tendant à tendre, étirer ou redresser les ondulations, tel qu'illustré à la figure 5b pour le profil A-A' en traits pointillés, correspondant à la coupe A-A' de la figure 5a. La figure 5b montre par ailleurs, en traits pleins, le profil B-B', avec les ondulations, correspondant à la coupe B-B' de la figure 5a, c'est-à-dire dans une zone ne subissant pas l'influence de l'aire de contact.

En faisant un parallèle avec le comportement dynamique d'un pneumatique de type radial traditionnel (sans ondulations), on note les points suivants. Lors du passage au niveau de l'aire de contact 31, de multiples sollicitations mécaniques intervienent. Entre le point d'entrée et le point de sortie de l'aire de contact, le pneumatique, subit une importante contrainte d'allongement dans le sens circonférentiel. Au niveau des flancs, ces sollicitations occasionnent un phénomène de « déradialisation » des fils de la structure de renfort. Les fils ont donc tendance à s'écarter les uns des autres, suite à un étirement élastique du mélange caoutchoutique du flanc entre les fils. Ce phénomène entraîne lui-même un certain échauffement du pneumatique, qui contribue à augmenter la résistance au roulement et affecte l'endurance du produit.

Avec un pneumatique selon l'invention, comportant une zone de flanc avec ondulations, les mêmes sollicitations mécaniques se manifestent entre l'entrée et la sortie de l'aire de contact. Cependant, les ondulations procurent une sorte de « réserve » de matière, disponible pour répondre aux diverses sollicitations mécanique dues aux déformations au niveau du passage dans l'aire de contact, et en particulier les sollicitations circonférentielles. Cette réserve disponible réduit ou peut même dans certains cas éviter le recours à l'étirement du mélange caoutchoutique entre les fils. On assiste donc à une déformation des ondulations dans la zone angulaire du pneumatique correspondant à l'aire de contact. Lesdites ondulations « s'aplanissent », ou diminuent d'amplitude. Les sollicitations mécaniques dues à l'aire de contact sont donc en quelque sorte amorties ou absorbées par les ondulations des flancs. Cette déformation procure une souplesse qui est particulièrement avantageuse pour les pneumatiques à flancs courts ou très courts, comme par exemple des pneumatiques de séries 35 ou 40.

La fabrication industrielle d'un pneumatique selon l'invention peut être réalisée selon plusieurs types de procédés. De manière avantageuse, on utilise un principe de pose sur noyau central permettant soit la pose individuelle des éléments constituants tels les mélanges caoutchoutiques et les renforts (fils) ou encore la pose de produits semi-finis tels des lamelles caoutchoutiques renforcées. Avec un tel procédé, on utilise un noyau central pourvu d'ondulations dans la zone correspondant sensiblement à la zone 11 du pneumatique, permettant ainsi de conférer, dès la pose des différents éléments, la forme ou profil ondulé des flancs, telle que préalablement décrite.

Il est également possible de réaliser le pneumatique avec un moule extérieur qui viendrait en contact avec le flanc ondulé. L'intérieur peut être moulé par un moule rigide ou une membrane souple, ou encore un moule partiellement rigide constitué par exemple de sections rigides séparées par des sections de membranes.

## Revendications

1. Pneumatique comportant au moins une structure de renfort (10) de type carcasse ancrée de chaque côté du pneumatique dans un bourrelet (1) dont la base est destinée à être montée sur un siège de jante, chaque bourrelet se prolongeant radialement vers l'extérieur par un flanc (6), les flancs rejoignant radialement vers l'extérieur une bande de roulement, la structure de renfort (10) de type carcasse s'étendant circonférentiellement depuis le bourrelet (1) vers ledit flanc, une armature de sommet, chacun des bourrelets comportant par ailleurs une zone d'ancrage permettant le maintien de la structure de renfort dans chacun desdits bourrelets, ladite structure de renfort de type carcasse étant agencée de façon à ce que, d'une part, dans la portion sensiblement médiane du flanc, les fils de ladite structure de renfort comportent, sur la circonférence, des positions axiales différentes, de façon à former une zone de flanc avec ondulations (11) comportant le long du parcours circonférentiel une succession d'ondulations sensiblement régulières formant un profil circonférentiel ondulé, et d'autre part, hors de cette zone (11), tous les fils de structure de type carcasse occupent une position axiale sensiblement identique,
**caractérisé en ce que** le pneumatique - est dépourvu, dans la portion sensiblement médiane du flanc, de renforts circonférentiels.

2. Pneumatique selon la revendication 1, dans lequel ladite zone (11) de flanc avec ondulations s'étend radialement dans le flanc entre le bourrelet (1) et la zone de sommet (9).

3. Pneumatique selon l'une des revendications 1 ou 2, dans lequel dans ladite zone (11) de flanc avec ondulations, les différentes positions possibles des fils de ladite structure de renfort se situent entre un cheminement de structure de renfort le plus axialement intérieur (12) et un cheminement de structure de renfort le plus axialement extérieur (13).

4. Pneumatique selon l'une des revendications précédentes, dans lequel la surface extérieure dudit flanc du pneumatique, dans la zone où la structure de renfort comporte lesdites ondulations, comporte également un profil circonférentiel ondulé, sensiblement en correspondance avec ledit profil formé par ladite structure de renfort.

5. Pneumatique selon l'une des revendications 1 à 4, dans lequel la position axiale d'un fil de renfort, pour une position circonférentielle donnée du profil circonférentiel ondulé, est sensiblement symétrique dans chaque flanc par rapport au plan médian dudit pneumatique.

6. Pneumatique selon l'une des revendications 1 à 4, dans lequel la position axiale d'un fil de renfort, pour une position circonférentielle donnée du profil circonférentiel ondulé, est sensiblement à l'opposée dans chaque flanc.

7. Pneumatique selon l'une des revendications précédentes, dans lequel le rapport h/H est compris entre 0,2 et 0,75.

8. Pneumatique selon la revendication 7, dans lequel le rapport h/H est compris entre 0,2 et 0,50.

9. Pneumatique selon l'une des revendications précédentes, dans lequel la distance D est au minimum de 1,25d.

10. Pneumatique selon la revendication 9, dans lequel les distances D et d forment entre elles un rapport de : 1,5d<D<5d.

## Claims

1. Tyre comprising at least one reinforcing structure (10) of the carcass type anchored on each side of the tyre in a bead (1) the base of which is intended to be mounted on a rim seat, each bead being extended radially outwards by a sidewall (6), the sidewalls, radially towards the outside, being joined to a tread, the reinforcing structure (10) of the carcass type extending circumferentially from the bead (1) towards the said sidewall, a crown reinforcement, each of the beads also comprising an anchoring region securing the reinforcing structure in each of the said beads, the said reinforcing structure of the carcass type being arranged in such a way that, on the one hand, in the substantially median portion of the sidewall, the threads of the said reinforcing structure have different axial positions on the circumference so as to form a sidewall region that has corrugations (11) comprising, along the circumferential path, a succession of substantially regular corrugations forming a corrugated circumferential profile and, on the other hand, outside of this region (11) all the threads of the structure of the carcass type occupy substantially the same axial position, **characterised in that** the tyre does not comprise circumferential reinforcements in the substantially median portion of the sidewall.

2. Tyre according to Claim 1, in which the said sidewall region (11) with corrugations extends radially into the sidewall between the bead (1) and the crown region (9).

3. Tyre according to one of Claims 1 and 2, in which, in the said sidewall region (11) with corrugations, the various possible positions of the threads of the said reinforcing structure lie between the axially innermost reinforcing structure path (12) and the axially outermost reinforcing structure path (13).

4. Tyre according to one of the preceding claims, in which the outer surface of the said sidewall of the tyre, in the region in which the reinforcing structure has the said corrugations, also has a corrugated circumferential profile, substantially corresponding to the said profile formed by the said reinforcing structure.

5. Tyre according to one of Claims 1 to 4, in which the axial position of a reinforcing thread, for a given circumferential position of the corrugated circumferential profile, is substantially symmetric in each sidewall with respect to the median plane of the said tyre.

6. Tyre according to one of Claims 1 to 4, in which the axial position of a reinforcing thread, for a given circumferential position of the corrugated circumferential profile, is substantially opposed in each sidewall.

7. Tyre according to one of the preceding claims, in which the ratio h/H ranges between 0.2 and 0.75.

8. Tyre according to Claim 7, in which the ratio h/H ranges between 0.2 and 0.50.

9. Tyre according to one of the preceding claims, in which the distance D is at least 1.25d.

10. Tyre according to Claim 9, in which the distances D and d have the following relationship: 1.5d<D<5d.

## Patentansprüche

1. Luftreifen, der mindestens eine Verstärkungsstruktur (10) vom Typ Karkasse aufweist, die auf jeder Seite des Luftreifens in einem Wulst (1) verankert ist, dessen Basis dazu bestimmt ist, auf einen Felgensitz montiert zu werden, wobei jeder Wulst sich radial nach außen durch eine Flanke (6) verlängert, wobei die Flanken sich radial nach außen mit einer Lauffläche vereinigen, wobei die Verstärkungsstruktur (10) vom Typ Karkasse sich in Umfangsrichtung vom Wulst (1) zur Flanke erstreckt, sowie eine Scheitelbewehrung, wobei jeder der Wülste außerdem eine Verankerungszone aufweist, die den Halt der Verstärkungsstruktur in jedem der Wülste ermöglicht, wobei die Verstärkungsstruktur vom Typ Karkasse so eingerichtet ist, daß einerseits in dem im Wesentlichen mittleren Abschnitt der Flanke die Drähte der Verstärkungsstruktur auf dem Umfang unterschiedliche axiale Positionen aufweisen, um eine Flankenzone mit Wellenformen (11) zu bilden, die entlang der Umfangsstrecke eine Folge von im Wesentlichen gleichmäßigen Wellenformen aufweist, welche ein gewelltes Umfangsprofil formen, und andererseits außerhalb dieser Zone (11) alle Drähte der Struktur vom Typ Karkasse eine im Wesentlichen gleiche axiale Position einnehmen,
**dadurch gekennzeichnet, daß** der Luftreifen in dem im Wesentlichen mittleren Abschnitt der Flanke keine Umfangsverstärkungen aufweist.

2. Luftreifen nach Anspruch 1, bei dem die Flankenzone (11) mit Wellenformen sich radial in der Flanke zwischen dem Wulst (1) und der Scheitelzone (9) erstreckt.

3. Luftreifen nach einem der Ansprüche 1 oder 2, bei dem in der Flankenzone (11) mit Wellenformen die verschiedenen möglichen Positionen der Drähte der Verstärkungsstruktur sich zwischen einem radial innersten Verstärkungsstrukturverlauf (12) und einem radial äußersten Verstärkungsstrukturverlauf (13) befinden.

4. Luftreifen nach einem der vorhergehenden Ansprüche, bei dem die Außenfläche der Flanke des Luftreifens in der Zone, in der die Verstärkungsstruktur die Wellenformen aufweist, ebenfalls ein gewelltes Umfangsprofil aufweist, das im Wesentlichen dem von der Verstärkungsstruktur geformten Profil entspricht.

5. Luftreifen nach einem der Ansprüche 1 oder 4, bei dem die axiale Position eines Verstärkungsdrahts für eine gegebene Umfangsposition des gewellten Umfangsprofils in jeder Flanke bezüglich der Mittelebene des Luftreifens im Wesentlichen symmetrisch ist.

6. Luftreifen nach einem der Ansprüche 1 oder 4, bei dem die axiale Position eines Verstärkungsdrahts für eine gegebene Umfangsposition des gewellten Umfangsprofils in jeder Flanke im Wesentlichen entgegengesetzt ist.

7. Luftreifen nach einem der vorhergehenden Ansprüche, bei dem das Verhältnis h/H zwischen 0,2 und 0,75 liegt.

8. Luftreifen nach Anspruch 7, bei dem das Verhältnis h/H zwischen 0,2 und 0,50 liegt.

9. Luftreifen nach einem der vorhergehenden Ansprüche, bei dem der Abstand D mindestens 1,25d beträgt.

10. Luftreifen nach Anspruch 9, bei dem die Abstände D und d zueinander ein Verhältnis von: 1,5d<D<5d bilden.
